(19) Europäisches Patentamt
European Patent Office
Office européen des brevets

(11) **EP 3 430 747 B1**

(12) **EUROPEAN PATENT SPECIFICATION**

(45) Date of publication and mention
of the grant of the patent:
**18.10.2023   Bulletin 2023/42**

(21) Application number: **16745928.8**

(22) Date of filing: **07.07.2016**

(51) International Patent Classification (IPC):
**H04L 1/00** *(2006.01)*          **H04L 1/08** *(2006.01)*

(52) Cooperative Patent Classification (CPC):
**H04L 1/0046; H04L 1/00; H04L 1/08**

(86) International application number:
**PCT/US2016/041401**

(87) International publication number:
**WO 2017/160335 (21.09.2017 Gazette 2017/38)**

(54) **DISCONTINUOUS DOWNLINK TRANSMISSIONS FOR MACHINE TYPE COMMUNICATIONS**

DISKONTINUIERLICHE DOWNLINK-ÜBERTRAGUNGEN FÜR MASCHINENKOMMUNIKATION

TRANSMISSION DE LIAISON DESCENDANTE DISCONTINUE POUR COMMUNICATIONS DE TYPE MACHINE

(84) Designated Contracting States:
**AL AT BE BG CH CY CZ DE DK EE ES FI FR GB
GR HR HU IE IS IT LI LT LU LV MC MK MT NL NO
PL PT RO RS SE SI SK SM TR**

(30) Priority: **15.03.2016   US 201662308688 P**

(43) Date of publication of application:
**23.01.2019   Bulletin 2019/04**

(73) Proprietor: **Apple Inc.
Cupertino, CA 95014 (US)**

(72) Inventors:
  • **MIAO, Honglei
    90491 Nuernberv BY (DE)**
  • **CHATTERJEE, Debdeep
    Mountain View, California 94041 (US)**
  • **BENDLIN, Ralf
    Portland, Oregon 97229 (US)**
  • **JUNG, Hyejung
    Palatine, Illinois 60067 (US)**
  • **HAN, Seunghee
    San Jose, California 95120 (US)**

(74) Representative: **Barnfather, Karl Jon
    Withers & Rogers LLP
    2 London Bridge
    London SE1 9RA (GB)**

(56) References cited:
**EP-A1- 2 919 402      WO-A1-2015/057028
GB-A- 2 522 482**

**Description**

BACKGROUND

Cellular wireless networks may be used as a platform for Internet of Things (IoT) connectivity. The extensive footprint, high reliability, and security features of wireless cellular networks can be ideal for servicing IoT devices.

Many IoT devices perform relatively infrequent small data transmissions. For example, IoT devices may include sensor devices (e.g., a temperature sensor, a utility meter reading device, etc.) that are designed to take a measurement once a day (or once a week, etc.) and then upload the measurement. For such devices, Narrowband IoT (NB-IoT) techniques, as described in the Third Generation Partnership Project (3GPP) specifications, may be used to communicate with the IoT devices. NB-IoT was designed as a Low Power Wide Area (LPWA) technology to simply and efficiently connect IoT devices on already established cellular wireless networks. NB-IoT may perform particularly well at handling small amounts of fairly infrequent 2‑way data, securely and reliably. NB-IoT may provide: very low power consumption and excellent penetration coverage.

Different deployment scenarios may be used with NB-IoT, including extended coverage for the NB-IoT User Equipment (UEs) with up to 164 decibels (dB) maximum coupling loss (MCL). To support extended coverage without significant increase of UE complexity, repetition based methods are used for the NB-IoT control and data channel transmissions. In repetition-based coding, in order to transmit a message over a noisy channel that may corrupt the message, the message may be redundantly transmitted over the channel.

EP 2 919 402 A1 provides a base station for repeatedly transmitting a physical downlink control channel (PDCCH) during a first subframe bundle comprising a plurality of subframes, and transmitting a PDSCH related to the PDCCH; and user equipment for receiving the PDCCH and the PDSCH. The PDSCH can be transmitted to the user equipment starting from subframe n+k, which is the kth subframe after the last subframe n-1 in the first subframe bundle, wherein k is an integer bigger than 0. The first subframe 1a le may begin from a predetermined or fixed position..

SUMMARY

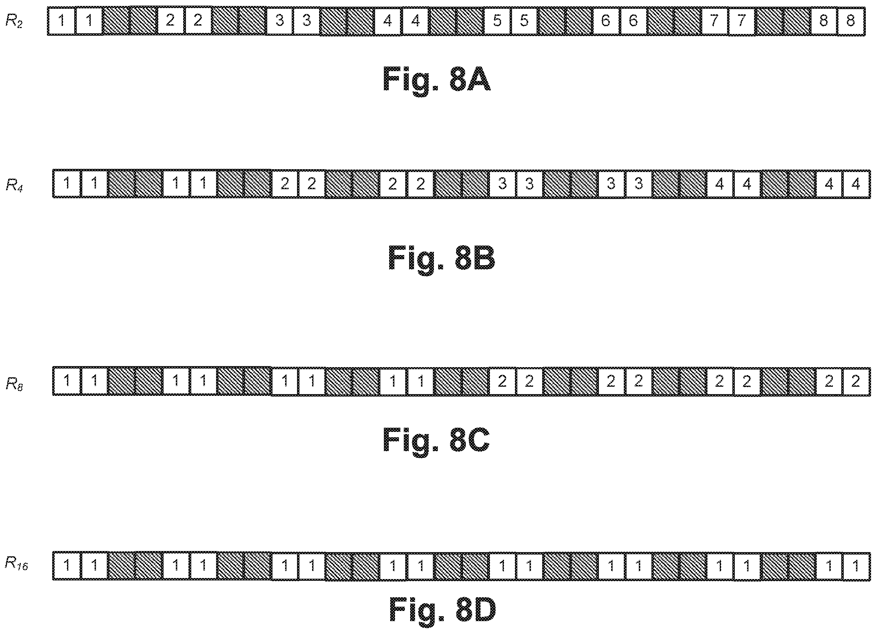

The invention is defined by the subject matter of the independent claims. Advantageous embodiments are subject to the dependent claims. The embodiments corresponding to figures 8B to 8D, as described hereinbelow, fall within the scope of the independent claims. Other embodiments described hereinbelow, which do not fall under the scope of the independent claims, are to be considered examples useful for understanding the invention.

BRIEF DESCRIPTION OF THE DRAWINGS

Embodiments described herein will be readily understood by the following detailed description in conjunction with the accompanying drawings. To facilitate this description, like reference numerals may designate like structural elements. Embodiments are illustrated by way of example and not by way of limitation in the figures of the accompanying drawings.

Fig. 1 is a diagram illustrating an example system in which systems and/or methods described herein may be implemented;
Fig. 2 is a diagram illustrating the concept of blind decoding of information by a UE;
Figs. 3 and 4 are flowcharts illustrating an example process relating to the use of repetition coding;
Figs. 5A-5D are diagrams illustrating one potential implementation of a repetition space, consistent with aspects described herein, for repetition of decode candidates;
Figs. 6A-6D are diagrams illustrating another potential implementation of a repetition space, consistent with aspects described herein, for repetition of decode candidates;
Figs. 7A-7D are diagrams illustrating another potential implementation of a repetition space, consistent with aspects described herein, for repetition of decode candidates;
Figs. 8A-8D are diagrams illustrating another potential implementation of a repetition space, consistent with aspects described herein, for repetition of decode candidates; and
Fig. 9 illustrates, for one embodiment, example components of an electronic device.

DETAILED DESCRIPTION OF PREFERRED EMBODIMENTS

The following detailed description refers to the accompanying drawings. The same reference numbers in different drawings may identify the same or similar elements. It is to be understood that other embodiments may be utilized and structural or logical changes may be made without departing from the scope of the present disclosure. Therefore, the following detailed description is not to be taken in a limiting sense, and the scope of embodiments is defined by the appended claims and their equivalents.

Techniques are described herein to support non-continuous repetition of physical control and data channels for massive machine type communications (mMTC) (e.g., for NB-IoT devices or mMTC devices). In one implementation, Radio Resource Control (RRC) signaling may be used to signal search space parameters, between a UE and an Evolved NodeB (eNB), relating to control channel radio resources that may contain decode (BD) candidates for the UE. Information elements transmitted using the decoding techniques described herein may be repeated to increase reception reliability and robustness. The parameters that define the search space or the repetition space for the BD candidates may define different levels of repetition and time diversity. In some implementations, the BD candidates may be transmitted non-continuously.

More particularly, in various implementations, non-continuous NB-IoT Physical Data Control Channel (NPDCCH) and NB-IoT Physical Data Shared Channel (NPDSCH) repetitions may be used in a manner that obtains time diversity of the control and data channel repetitions. For a particular repetition level, non-continuous NPDCCH and NPDSCH repetitions may lead to better decoding performance than continuous repetitions. These techniques may be particular useful for the UE extreme coverage case.

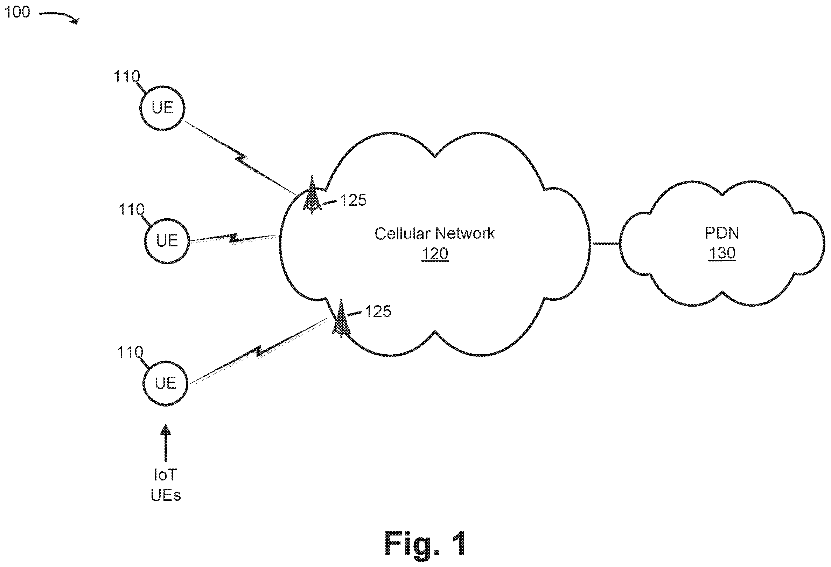

Fig. 1 is a diagram illustrating an example system 100 in which systems and/or methods described herein may be implemented. As illustrated, system 100 may include a number of UEs 110, which may obtain network connectivity from cellular network 120. The techniques described herein may be particularly useful for supporting machine type communications, such as for supporting uplink or downlink transmissions for mMTC devices or NB-IoT devices. Accordingly, in the description that follows, UEs 110 may particularly include these devices. However, the techniques described herein may also be applicable to non-IoT UEs.

Cellular network 120 may include a radio access network (RAN) portion and a core network portion. The RAN may particularly include base stations, which, in the context of a 3GPP network, may be referred to as Evolved NodeBs (eNBs) 125. eNBs 125 may provide the air (radio) interface for wireless connections with UEs 110. The core network portion of cellular network 120 may include an Internet Protocol ("IP")-based network, such as a General Packet Radio Service (GPRS) core network. Through cellular network 120, UEs 110 may communicate with an external network, such as packet data network (PDN) 130. For example, an operator of a network of IoT devices may control and/or collect data, from the IoT devices, using one or more application servers that are connected to PDN 130.

eNBs 125 may include one or more network devices that receive, process, and/or transmit traffic destined for and/or received from UE 110 (e.g., via an air interface). eNBs 125 may include antennas and other logic necessary to wirelessly communicate with UEs 110. eNBs 125 may additionally communicate with other network devices in the core portion of the wireless telecommunications network. Although referred to as an "eNB," eNB 125 may generally represent any base station and/or RAT node that is implemented in a cellular network as a network device designed to wirelessly communicate with UEs.

UEs 110, as IoT devices, may each include a device that may implement one or more sensing components and a communication component. The sensing component may include, for example, a temperature sensor, a humidity sensor, a light sensor, a camera, a video camera, a geo-positioning element (e.g., a GPS component), and/or other sensors that generate or monitor data that relates to the environment of UE 110. The communication component may include a wireless or wired communication circuit that UE 110 may use to transmit the sensed data to another IoT device and/or to cellular network 120. For example, the communication component may include a cellular radio. When designed to communicate with a cellular network, an IoT device may also be referred to as a Cellular IoT (CIoT) device.

Although not shown in Fig. 1, in a typical implementation, UEs that include user mobile devices, such as cellular telephones, may be present and connect to cellular wireless network 120. That is, wireless cellular network 120 may be operated to provide communications services to both IoT devices and user mobile devices.

PDN 130 may include one or more packet networks, such as an Internet Protocol (IP) based packet network. PDN 130 may include a wide area network (WAN), a local area network (LAN), and/or combinations of WANs and LANs. Application servers or other computing devices, designed to control or aggregate data from IoT devices 110, may be connected to PDN 130.

The quantity of devices and/or networks, illustrated in Fig. 1, is provided for explanatory purposes only. In practice, there may be additional devices and/or networks; fewer devices and/or networks; different devices and/or networks; or differently arranged devices and/or networks than illustrated in Fig. 1. Alternatively, or additionally, one or more of the devices of system 100 may perform one or more functions described as being performed by another one or more of the devices of system 100.

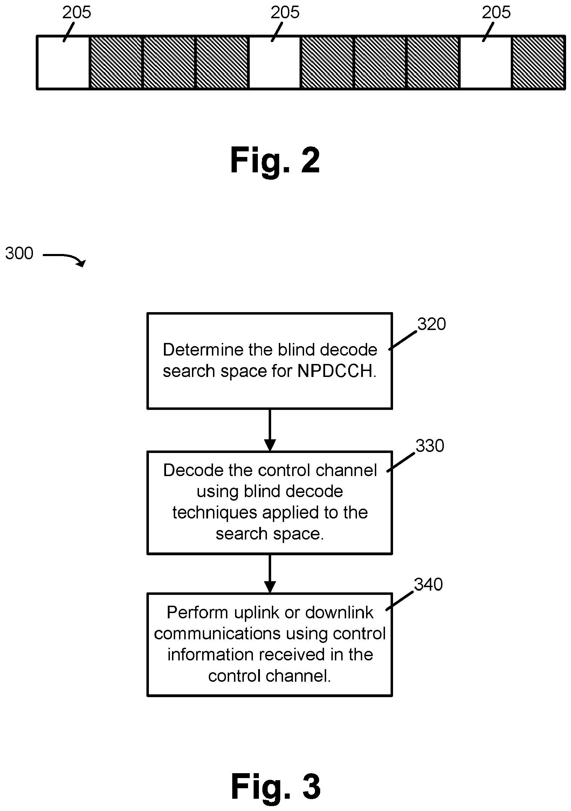

Fig. 2 is a diagram illustrating the concept of decoding of information by a UE. In one implementation, repetition decoding, as described herein, may be performed for a control channel of the radio interface of UE 110 (i.e., with eNBs 125), such as in the NPDCCH. In this case, the decode information elements may correspond to repetitions of the NPDCCH carrying Downlink Control Information (DCI). In this implementation, the information received via the control channel may provide UE 110 with information needed to decode the downlink data channel or the uplink data channel. Alternatively or additionally, repetition decoding, as described herein, may be used for the downlink data channel, such as in the NPDSCH. In this case, the decode information elements may correspond to repetitions of NPDSCH subframes carrying the NPDSCH transport block (TB).

As shown in Fig. 2, a downlink channel is illustrated as including a number of subframes. Each subframe may correspond to one physical resource block (PRB). For a particular UE 110, only certain of the subframes may be potentially relevant to the UE. In this example, assume that the downlink channel search space (SS) for the UE specifies that subframes 205 are potentially relevant to the UE. The other subframes (illustrated with crosshatching in Fig. 2) may be out of the search space for the UE and they UE may not need to decode these subframes. The particular search space for the UE may be communicated from eNB 125 to UE 110, preconfigured for the UE, or communicated to UE 110 in some other manner.

For blind decoding, only some (or potentially none) of subframes 205 may be relevant to the particular UE 110. Blind decoding may particularly apply to the repetition decoding used for the NPDCCH. In this case, UE 110 may attempt to decode each of subframes 205. When the UE is able to successfully decode the subframe (meaning that the subframe is intended for the UE), the UE may further process the subframe as a subframe that includes data relevant to the UE. For some subframes, however, the UE may not be able to successfully decode the subframe, which may indicate that the subframe was not intended for the particular UE. In this case, the UE may ignore the subframe. In this manner, "blind decoding" is performed in which the UE "blindly" decodes a number of potential subframes to find the subframes that are actually intended for the UE. In Fig. 2, subframes 205 may be referred as the BD candidates that are relevant to the particular UE. The set of BD candidates that the UE is to attempt to decode may be referred to as the blind decode search space.

Fig. 3 is a flowchart illustrating an example process 300 relating to the use of repetition coding for blind decoding of the NPDCCH. Process 300 may be performed, for example, by UE 110.

Process 300 may include determining, for NPDCCH decoding, the blind decode search space (block 320). System Information Block (SIB) signaling may be used to determine the blind decode search space. For example, eNB 125 may transmit one or more parameters describing the blind decode search space. In one implementation, the parameters describing the blind decode search space may include one or more of: an aggregation value defining a number of different information elements (e.g., control channel blocks) that are contained within one period of the search space; a repetition level indicating the number BD candidates used to transmit each information element (i.e., the repetition level indicates an amount of redundancy for each information element); and a time interval between adjacent repetitions of the BD candidates.

Process 300 may further include decoding the control channel using blind decode techniques applied to the determined search space (block 330). For example, UE 110 may use the determined search space to decode the NPDCCH to thus obtain control information from eNB 125. The control information may relate to, for example, scheduled resource blocks that the UE should decode for downlink data transmissions. As another example, the control information may indicate uplink grants that the UE may use in transmitting uplink data to eNB 125. Process 300 may thus further include performing uplink or downlink communications, with eNB 125, using the determined control information (block 340).

The flowchart of Fig. 3 describes repetition decoding for NPDCCH. For NPDSCH repetition decoding, the subframes used for the NPDCCH repetition decoding may be received from eNB 125. For example, SIB signaling may be used to convey an indication of the relevant subframes to the UE.

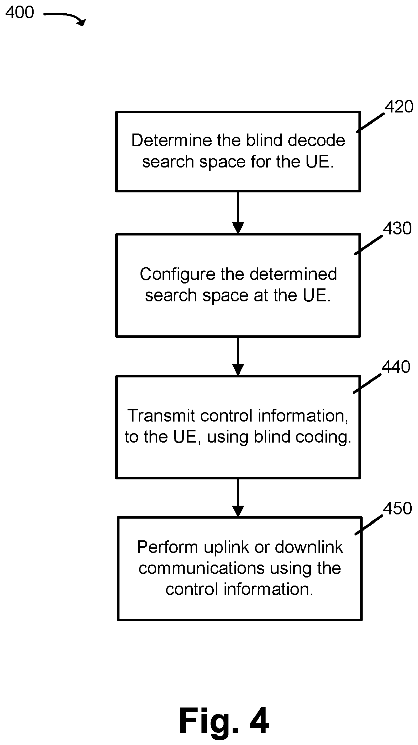

Fig. 4 is a flowchart illustrating an example process 400 relating to the use of repetition coding. Process 400 may be performed, for example, by eNB 125. Process 400 may particularly relate to repetition decoding for NPDCCH.

Process 400 may further include determining the BD search space for the UE (block 420). A number of potential search space configurations, as will be described in more detail below, may be used. The particular search space to use, for a particular UE, may depend on a number of factors. For example, the signal quality of the connection with the UE may be used to determine parameters of the search space, such as the repetition level and the time interval between BD candidates.

Process 400 may further include configuring the determined search space at the UE (block 430). For example, RRC signaling may be used to configure the search space. In other implementations, other techniques may be used to configure the search space.

Process 400 may further include transmitting control information, to the UE, using blind coding of information elements in the configured search space (block 440). For instance, eNB 125 may transmit downlink scheduling information or uplink assignment information, to the UE, via the NPDCCH and using blind coded repetition coding.

Process 400 may further include performing uplink or downlink communications, with UE 110, using the control information (block 450).

The flowchart of Fig. 4 describes repetition decoding for NPDCCH. For NPDSCH repetition decoding, the subframes used for the NPDCCH repetition decoding may be similarly determined by eNB 125 and transmitted to the UE. For example, SIB signaling may be used to convey an indication of the relevant subframes to the UE.

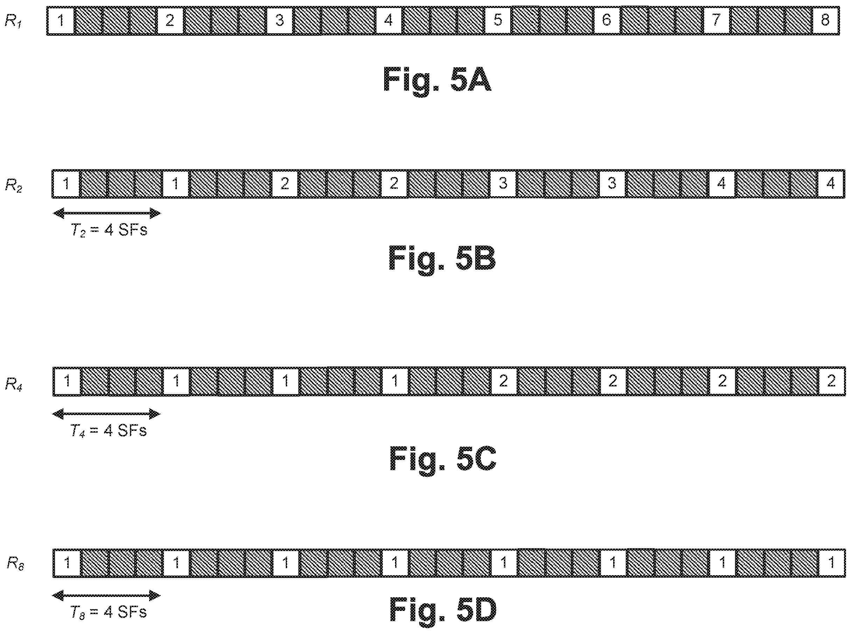

Figs. 5A-5D are diagrams illustrating one potential implementation of a search space, consistent with aspects described herein, for repetition of information elements. Although the information elements may be referred to as BD candidates herein, it can be appreciated that similar techniques may be applied for repetition decoding for NPDSCH. The techniques described herein with respect to Figs. 5A-5D will be referred to herein as repetition interval selection. A repetition time interval, $T_i$, may be defined as the time interval between sequential BD candidates of the same information element. Each BD candidate may correspond to, for example, an information element (e.g., control information transmitted by eNB 125) contained in a subframe. A repetition level, $R_i$, may be defined that relates to the amount of repetition that is used for each BD candidate. In one implementation, downlink redundancy in the BD candidates may be achieved by repeating each BD candidate i times (e.g., where $R_1$ corresponds to the situation in which there is no repetition, $R_2$ corresponds to the situation in which each BD candidate is transmitted twice, $R_4$ corresponds to the situation in which each BD candidate is transmitted four times, etc.). In another possible implementation, downlink redundancy in the BD candidates may be achieved by repeating each BD candidate a multiple of i times or another amount of times. For example, $R_1$ may correspond to the situation in which each BD candidate is transmitted four times, $R_2$ may correspond to the situation in which each BD candidate is transmitted eight times, $R_4$ may correspond to the situation in which each BD candidate is transmitted 16 times, etc. In other implementations, downlink redundancy may be coded using techniques other than repetition (e.g., forward error correction techniques).

$T_i$ and $R_i$ can be signaled, to UE 110 and by eNB 125, as part of the search space configuration information, or derived by UE 110 in some other manner. For example, eNB 125 may communicate the total time duration of the decoding operation and the smallest or largest repetition that may be used, and UE 110 may derive the time intervals for other repetition levels based on the search space design. The BD candidate search space may be configured on a UE-specific basis. For example, if UE 110 is configured with four repetition levels, i.e., $R_1$, $R_2$, $R_4$, and $R_8$, the four repetition time intervals $T_1$, $T_2$, $T_4$, and $T_8$ may be respectively configured per repetition level. The time interval $T_i$ can be the same or different among different repetition levels. An example of different $T_i$ values for different repetition levels is the case when $T_1 \leq T_{i+1}$, for $i \geq 1$.

In Figs. 5A-5D, various repetition levels are illustrated, in which $T_i$ is equal for each of the repetition levels. In particular, as shown, the repetition levels corresponding to $R_1$, $R_2$, $R_4$, and $R_8$ are illustrated in Figs. 5A-5D, respectively. $T_2$, $T_4$, and $T_8$ may each be equal to four subframes. Non-BD candidate subframes are illustrated using crosshatching. The BD candidate subframes are each labeled with an integer value, where different integer values, in different repetition configurations, indicate different information elements. Different information elements may be destined for different UEs. For instance, in Fig. 5B, each of the different information elements (each transmitted as two BD candidates) may be destined for the same or different UEs.

As shown, in Fig. 5A, repetition level 1 ($R_1$) is illustrated, in which eight different information elements are possible (integer labels 1 - 8). Thus, in this implementation, there is no repetition and each BD candidate may convey unique information (i.e., correspond to an information element). In Fig. 5B, repetition level 2 ($R_1$) is

illustrated, in which four different BD candidates are illustrated (integer labels 1-4). In this implementation, each information element is transmitted twice (e.g., information element "1" is transmitted, as a BD candidate, in the first and fifth subframe). In Fig. 5C, repetition level 4 ($R_4$) is illustrated, in which two different information element are illustrated (integer labels 1 and 2). In this implementation, each information element is transmitted four times (e.g., information element "1" is transmitted, as a BD candidate, in the first, fifth, ninth, and sixteenth subframes). In Fig. 5D, repetition level 8 (Ra) is illustrated, in which one information element is illustrated (integer label 1). In this implementation, each information element is transmitted as eight times. The implementation of Fig. 5D may be used in a situation in which the radio channel with UE 110 is particularly noisy or UE 110 is at the limits of coverage. By using a relatively high level of redundancy (i.e., repetition level 8), UE 110 may be able to reconstruct a valid information element. In the implementations of Figs. 5B-5D, the repeated BD candidates are transmitted one after the other, i.e., the first BD candidate and all the repetitions of the first BD candidate are transmitted before the BD candidates of the next information element. Thus, each information element is transmitted in a continuous manner.

In a first particular implementation of repetition interval selection (e.g., the embodiment shown in Figs. 5A-5D), 15 BD candidates may be transmitted in a total time duration of 32 subframes, which would approximately correspond to one 1 BD candidate per every two subframes. Relative to conventional blind decoding transmissions, in which BD candidates are transmitted sequentially after one another (e.g., $T_i = 1$), due to the longer time spacing of the BD candidates relative to continuous repetition, the detection performance of the respective BD candidate decoding may be improved due to increased time diversity. In this implementation the BD decoding candidate with the largest repetition level may be used to determine the set of subframes which are used to form the BD candidates of the other repetition levels.

In the discussion above with respect to the first implementation of repetition interval selection, the time intervals $T_i$ were described as being equal across the possible repetition levels (e.g., $R_1$, $R_2$, $R_4$, and $R_8$). In some implementations, however, the time intervals $T_i$ may be more generally defined as being repetition level specific.

For example, in a second implementation of the search space, as shown in Figs. 5A-5D, a time interval $T_{\min}$ may be defined as the time interval between available subframes for transmission of BD candidates corresponding to the minimum repetition level configured in the search space. Thus, for a search space in which $R_2$ is defined as the lowest repetition level, $T_{min}$ may correspond to the repetition time interval of the repetition level $R_2$ candidate. The repetition time interval of other repetition levels $R_l$ ($l \geq 2$) BD candidates may be defined as follows:

$$T_l = kT_{min'},$$

where k is an integer that is greater than or equal to 1 and may be signaled as part of the search

space configuration. The signaling of k may provide an additional degree of freedom to optimize the trade-off between resource blocking of large repetition level BD candidates and fast scheduling of small repetition candidates for UE 110 when in good channel conditions.

In a third implementation of the search space, as shown in Figs. 5A-5D, the time interval $T_{min}$ may be defined as with respect to the second implementation, and $T_l$ may be scaled progressively for each higher repetition level. That is, $T_2 = kT_1$, where $T_1 = T_{min}$ and k is the scaling factor. More generally:

$$T_{i+1} = kT_i, \text{ for } i \geq 1.$$

In a fourth implementation of the search space, as shown in Figs. 5A-5D, the ratio $T_{i+1}/T_i = s *(numRep_{i+1}/numRep_i)$ may be used to determine the time periods, where s is a scaling factor and the resulting $T_{i+1}/T_i$ ratio is a taken as an integer, and $numRep_i$ is the number of repetitions configured for repetition level $R_i$.

In a fifth implementation of the search space, as shown in Figs. 5A-5D, additional constraints may be defined as a function of the number of repetitions for a repetition level. As a specific example, the progressive scaling described with respect to the third embodiment may be defined only for repetition level $R_i$ with number of repetitions $numRep_i$ such that $numRep_i \geq numRepThres$, where $numRepThres$ is a specified or Radio Resource Control (RRC) configured cell-specific or UE-specific parameters. Thus, for such a case, $T_{min}$ may be the time interval for all repetition levels in which the number of repetitions < $numRepThres$.

One potential issue with the second through fifth implementations is that such "close packing" of NPDCCH BD candidates with a lower number of repetitions can result in an increase in the number of BD attempts that the UE may need to perform within the search space. In order to prevent this, additional constraints on the starting subframes for the NPDCCH candidates can be applied such that for an NPDCCH BD candidate with repetition level $R_i$, the starting subframes may be limited such that the number of BD attempts for each $R_i$ within the search space is no more than the ratio $numRep_{i+1}/numRep_i$.

As a specific example, the starting subframe for an NPDCCH BD candidate with $numRep_i$ repetitions may be limited to every $numRep_i * (T_{i+1}/T_i) *(numRep_{i+1}/numRep_i)$ valid subframes for $i < i_{max}$, where $i_{max}$ is the highest repetition level in the search space. The benefit with this would be that for BD candidates with a small number of repetitions, the transmission can be done quickly. For reference, without the above restriction, the starting subframe for an NPDCCH candidate with $numRep_i$ repetitions is limited to every $numRep_i * T_i$ subframes. Hence, when $T_i < T_{i+1}$ and $numRep_i < numRep_{i+1}$, then the number of BD candidates in the search space for repetition level $R_i$ may be larger than the relative number of BD candidates shown in Figs. 5A-5D, thereby increasing complexity of UE 100.

For the second through fifth implementations described above, the described concepts can also be realized based on the time interval $T_{max}$ corresponding to the maximum repetition level, with straightforward adaption of the above relationships.

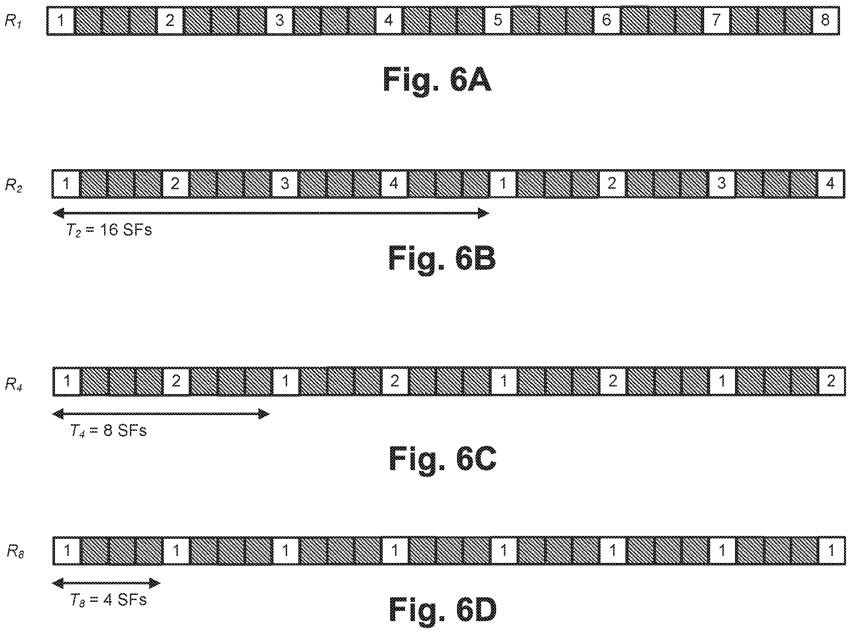

Figs. 6A-6D are diagrams illustrating another potential implementation of a search space, consistent with aspects described herein, for repetition of BD candidates. Relative to Figs. 5A-5D, in the implementation of Figs. 6A-6D, additional time diversity between BD candidates may be obtained.

In Fig. 6A and 6D, repetition levels 1 ($R_1$) and 8 ($R_8$) are respectively illustrated. For $R_1$ and $R_8$, the transmission of the information elements may be essentially identical to that illustrated in Figs. 5A and 5D. In Figs. 6B and 6C, corresponding to repetition levels 2 ($R_2$) and 4 ($R_4$), respectively, the BD candidate repetitions are spaced farther apart in time, relative to Figs. 5B-5C, to thus create additional time diversity. For example, as shown in Fig. 6B, an implementation of $R_2$ is shown in which four different information elements are transmitted (integer labels 1-4), in which each information element is transmitted as two BD candidates, and in which BD candidates of different information elements are interleaved with one another. That is, as shown, the first BD candidate of information element " 1 " is transmitted, followed by the first BD candidate of information element "2," followed by the first BD candidate of information element "3," followed by the first BD candidate of information element "4," followed by the second BD candidate of information element "1," etc. Similarly, in Fig. 6C, $R_4$ is represented, in which two different information elements are illustrated (integer labels 1 and 2), and each information element is transmitted as four BD candidates, and wherein the repetitions for the BD candidates are alternated in time.

A discussion of the parameters that can be used to define search spaces for blind decoding, to maximize time diversity (e.g., as illustrated in Figs. 6A-6D) will next be discussed. The parameters may be generally optimized to maximize the time diversity of the BD candidates for each repetition level.

The maximum time duration, $D_{max}$, may be defined as the total time period of an information element with the highest repetition level $R_{Lmax}$. The search space may then be designed to fulfill the following requirements so as to maximize the time diversity of the BD candidates at each repetition level:

- The repetition time interval (i.e., the time period between repetitions), $T_{min}$, of the BD candidate with the largest repetition level may be calculated as $T_{min} = Dmax / R_{Lmax}$.

- BD candidates of other repetition levels, $R_l < R_{Lmax}$ may be implemented using subframes belonging to the set of subframes used for the BD candidate with largest repetition level.
- The repetition time interval, $T_l$, of BD candidates of repetition level $R_l$, $l = 2, 4, ..., L_{max}$ may be determined as

$$T_l = (L_{max}/l) * T_{min}$$

To meet the above requirements, the search space can be constructed as follows. Each repetition of the BD candidate may be numbered with largest repetition level $R_{Lmax}$ in the increasing time order, i.e., $r = 0, 1, 2, ..., L_{max-1}$. For each repetition level $R_l$, the number of BD candidates may be calculated as

$$N_{Bd, l} = L_{max}/l$$

such that the BD candidates can be numbered as $n_l = 1, 2, ..., N_{BD,l}$. And each BD candidate $n_l$ is formed of the following $l$ repetitions.

$$r(n_l, k) = n_l - 1 + k * N_{BD,l}, k = 0, 1, ..., l-1$$

With the above BD candidate assignment, all BD candidates of the same repetition level may have a same amount of maximized time diversity.

In one particular implementation of the embodiment shown in Figs. 6A-6D, the time duration $D_{max}$ of the BD candidate with largest repetition level $R_{Lmax}$ may be signaled to UE 110 by RRC signaling to signal the search space configuration for the UE.

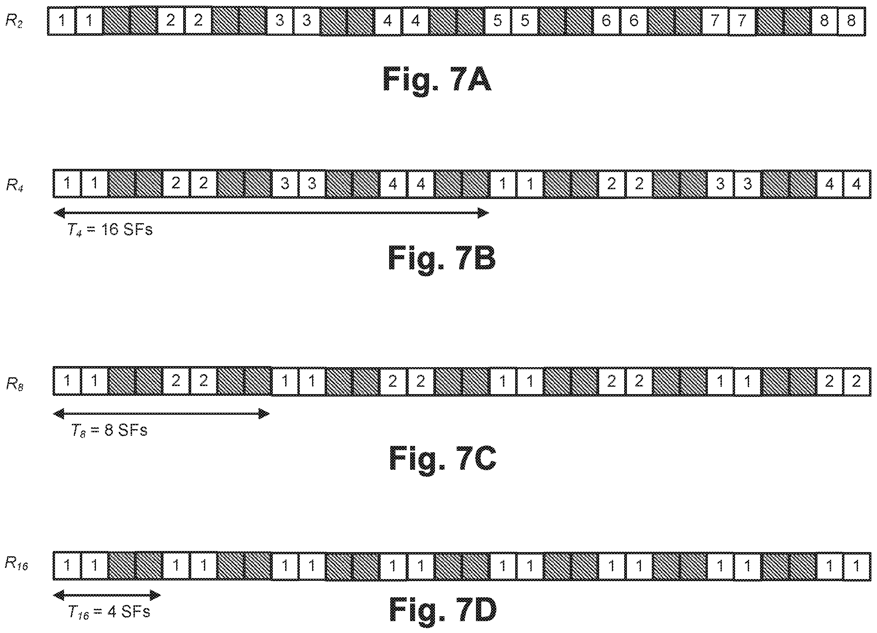

Figs. 7A-7D are diagrams illustrating another potential implementation of a search space, consistent with aspects described herein. The embodiments described with respect to Figs. 7A-7D will be referred to as continuous inner layer and non-continuous outer layer repetition. In the implementation of Figs. 7A-7D, the combination of continuous and non-continuous transmission of BD candidate subframes may be used. The use of both continuous and non-continuous transmission may provide for a useful tradeoff between UE power consumption, latency, and resource blocking. More specifically, a two layer discontinuous transmission pattern may include a number of (valid) downlink (DL) subframe clusters, each of which may include n number of continuous (valid) DL subframes, with time intervals $T_i$ defined between each pair of consecutively occurring subframe clusters of an information element. The "number of valid DL subframes," in this context, may refer to either the number of valid subframes or the absolute number of DL subframes (i.e., counting invalid DL subframes).

As a specific example, $T_i$ can be defined as the time interval between the first subframe in two clusters of an information element, and thus, $T_i \geq n$. Alternatively, $T_i$ can be defined as the time interval between the last subframe of the prior cluster and the first subframe of the subsequent cluster in terms of (valid) DL subframes. In the latter case, $T_i$ may be referred to as the DL gap size or gap duration. In Figs 7A-7D, the gap duration is illustrated as two subframes.

The value of $n$ can be either specified or configured by UE-specific higher layer signaling (e.g., as part of the UE-specific search space (USS)) or via System Information Blocks (SIB) signaling (e.g., for any common search space and/or USS). Such a configuration can be beneficial to allow for data driven frequency tracking and/or symbol level combining at subframe level.

As shown in Figs. 7A-7D, a cluster size of two subframes (n=2) is illustrated. In the examples of Figs. 7A-7D, each cluster may include two repetition candidates that are transmitted as two (n=2) identical subframes that are sequential in time. In other implementations, $n$ may be set to other values. The values of n and of the DL gap period, as shown in Figs. 7A-7D, are examples that are shown for purposes of illustration. In other implementations, the parameters that define the continuous inner layer and non-continuous outer layer repetition may be varied. As one particular example, in one implementation, the DL gap periods may be set to a single value for each repetition level i.

In Fig. 7A, repetition level 2 ($R_2$) is illustrated. Eight different information elements are shown (integer labels 1-8), in which each information element is transmitted as two back-to-back repetition candidates within a single cluster. In Fig. 7B, repetition level 4 ($R_4$) is illustrated. Four different information elements are shown (integer labels 1-4), in which each information element is transmitted as two clusters, each of length two repetition candidates (two subframes), and the time period between clusters is 16 subframes ($T_4 = 16$). In Fig. 7C, repetition level 8 ($R_8$) is illustrated. Two different information elements are shown (integer labels 1 and 2), in which each information element is transmitted as four clusters, each of length two repetition candidates, and the time period between clusters is eight subframes ($T_8 = 16$). In Fig. 7D, repetition level 16 ($R_{16}$) is illustrated. One information element is transmitted (integer label 1), in which the information element is transmitted as eight clusters, each of length two subframes, and the time period between clusters is four subframes ($T_{16} = 4$).

Figs. 8A-8D are diagrams illustrating another potential implementation of continuous inner layer and non-continuous outer layer repetition. Figs. 8A-8D are similar to Figs. 7A-7D, respectively, except that, in Figs. 8A-8D, all the repetition candidates for an information element are transmitted before the next information element is transmitted.

In one particular implementation relating to continuous inner layer and non-continuous outer layer candidate repetition, the repetition space may be signaled, to UE 110, using dynamic signaling techniques. In particular, the time interval between repetitions in the NPDSCH can be signaled by Downlink Control Information (DCI) that is carried in the NPDCCH. Based on the trade-off between the required time diversity and coding gain obtained from the repetitions, eNB 125 can determine a desirable time interval between adjacent NPDSCH repetitions. The time interval can be dynamically signaled, via the DCI, to UE 110. For example, a new field defining the NPDSCH repetition time interval, in terms of number of subframes, may be added to the DCI format. In one embodiment, $N$ DCI bits may be used indicate a time intervals of $\{1,2,3...2^N\}$ subframes. In another embodiment, the time intervals may be limited to being powers of two, i.e., $N=1$ bits indicate $\{1,2\}$ subframes, $N=2$ bits indicate $\{1,2, 4, 8\}$ subframes, and so forth. Alternatively or additionally, other search space parameters, such as the repetition level, may be signaled through the DCI.

In a second implementation relating to continuous inner layer and non-continuous outer layer candidate repetition, the discontinuous transmission configuration may be signaled using semi-static techniques, like RRC signaling. For example, the NPDSCH and NPDCCH repetition time interval can be signaled to UE 110 using UE-specific or UE-common RRC signaling as part of the radio resource configuration. Since this time interval can be reconfigured by eNB 125, the semi-static time interval updates may be supported.

In a third implementation, relating to continuous inner layer and non-continuous outer layer BD candidate repetition, a combination of dynamic and semi-static signaling may be used to configure the BD search space at UE 110. For example, a number of supported NPDSCH repetition time intervals may be semi-statically configured using UE specific RRC signaling. DCI signaling may be used to configure the selected NPDSCH repetition time interval from the set of supported repetition time intervals to UE 110 for the current scheduled NPDSCH transmission. This can reduce the NPDCCH payload size relative to the dynamic signaling implementation. Alternatively, different RRC configured supported repetition time intervals may overlap with one another. This may prevent frequent RRC reconfiguration in case the propagation conditions of the wireless channels between the transmitter and receiver fluctuate.

Discontinuous transmissions can also be used for PDSCH or NPDSCH transmissions. For example, the time intervals within the PDSCH or NPDSCH repetitions can be defined as a function of the repetition level indicated in the DCI. Alternatively, the time interval can be defined as a function of the maximum or minimum repetition level that is part of the RRC-configured set of repetitions for which UE 110 is configured to use. Thus, a mapping can be specified or configured by SIB signaling from the repetition level (or maximum repetition level in a repetition level set) to the corresponding time interval values. In one particular implementation, a common time interval value (i.e., common DL gap period) may be used (i.e., $T_1 = T_2 = T_3 = T_4 = T$), and the common time interval value may be based on the maximum repetition level for which the UE is configured for the NPDCCH search space.

Further, in some implementations, the different RRC-configured set of repetitions a UE can be configured to overlap so as to reduce the need to have frequent RRC reconfigurations at the expense of coarser granularity of the repetitions. Alternatively or additionally, the DCI bit-width may be increased to dynamically indicate the number of repetitions from the RRC-configured set.

In 3GPP radio networks, UEs and eNBs may estimate the properties of the radio channel. Channel estimation can play an important role in orthogonal frequency division multiplexing (OFDM) systems. To facilitate the estimation of the channel characteristics, cell-specific reference signals (pilot symbols) may be inserted in both time and frequency. These pilot symbols can be used to provide an estimate of the channel at given locations within a subframe.

Channel estimation may have a significant impact on the detection performance of NPDCCH and NPDSCH. Cross-subframe channel estimation based on reference signals (RS) such as Narrowband-RS (NB-RS) in consecutive subframes may be used to improve NB-IoT performance. With a large repetition time interval, however, continuous cross-subframe channel estimation may be too costly from the point-of-view of UE power consumption. Accordingly, in one implementation, cross-subframe channel estimation can be performed over several subframes surrounding a repetition subframe or repetition cluster. An averaging window of the channel estimation can be determined/adapted according to the required channel estimate quality. Alternatively or in addition, the UE determination of the presence of the reference signals can be specified or configured depending on the time intervals, $T_i$. For example, the NB-IoT or mMTC UE may enter a dormant or semi-dormant (micro-sleep) state for improved power consumption in parts of the time intervals, $T_i$, whereas in the remaining parts of the time intervals, $T_i$, the UE may perform cross-subframe channel estimation. In one embodiment, such a UE behavior can be implementation specific. In another embodiment, the UE behavior can be defined explicitly or implicitly by some of the embodiments herein. For example, the UE may be configured to not detect NB-RS in some subframes during time intervals, $T_i$. The channel estimates may be used to assist in the demodulation of received BD candidates. For example, the channel estimate values may be used to optimize demodulation of each of the BD candidates for an information element, and UE 110 may then combine all of the demodulated BD candidates corresponding to the information element and perform decoding of control and/or data channel using the combined signal.

In some implementations, the time interval, $T_i$, for a particular UE, may be derived by the UE or the eNB based on factors such as the Quality of Service (QoS) requirement for a particular service/application and/or a mobility state of the UE. In one implementation, $T_i$ may be derived by the UE or the eNB based on subscribed QoS and based on channel estimation values.

As used herein, the term "circuitry" or "processing circuitry" may refer to, be part of, or include an Application Specific Integrated Circuit (ASIC), an electronic circuit, a processor (shared, dedicated, or group), and/or memory (shared, dedicated, or group) that execute one or more software or firmware programs, a combinational logic circuit, and/or other suitable hardware components that provide the described functionality. In some embodiments, the circuitry may be implemented in, or functions associated with the circuitry may be implemented by, one or more software or firmware modules. In some embodiments, circuitry may include logic, at least partially operable in hardware.

In many of the techniques described above, the described functionality may be implemented in baseband circuitry associated with UE 110 or eNB 125. Additionally, the search space parameters described above (the time interval, subframe cluster size, etc.) as UE-specific parameters can also be configured as cell-specific parameters for Common Search Space (CSS) paging or as coverage class-specific or LTE Physical Random Access Channel (PRACH) repetition level-specific parameters for CSS for Random Access procedure. While many of the concepts described previously were discussed in terms of absolute subframes, if the set of valid downlink subframes are indicated in a cell-specific manner, e.g., via the System Information (common RRC signaling), then, in some implementations, the available subframes and time gaps can be defined in terms of the valid subframes only (i.e., any subframe that is not a valid subframe to carry NPDCCH or NPDSCH may not be counted). Similarly, the for "consecutive-in-time" subframe clusters, the subframes comprising each subframe cluster can be mapped to consecutive valid subframes that may not be strictly contiguous-in-time. Such a definition may be useful for the case when the discontinuous transmissions are used to reduce user blocking, and not only to realize time diversity.

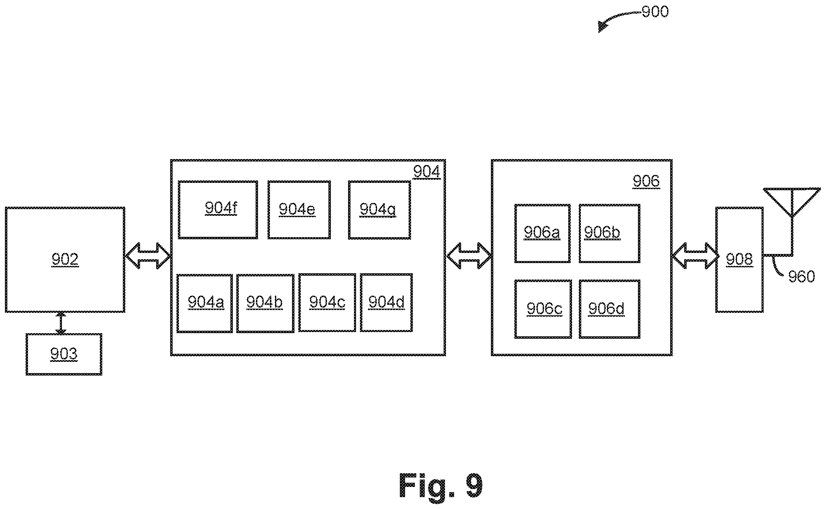

Embodiments described herein may be implemented into a system using any suitably configured hardware and/or software. Fig. 9 illustrates, for one embodiment, example components of an electronic device 900. In embodiments, the electronic device 900 may be a mobile device, a RAN node, a network controller, a subscription repository, a data gateway, a service gateway, or an application server. In some embodiments, the electronic device 900 may include application circuitry 902, baseband circuitry 904, Radio Frequency (RF) circuitry 906, front-end module (FEM) circuitry 908 and one or more antennas 960, coupled together at least as shown. In embodiments in which a radio interface is not needed for electronic device 900 (e.g., a data gateway, network controller, etc.), the RF circuitry 906, FEM circuitry 908, and antennas 960 may be omitted. In other embodiments, any of said circuitries can be included in different devices.

Application circuitry 902 may include one or more application processors. For example, the application circuitry 902 may include circuitry such as, but not limited to, one or more single-core or multi-core processors. The processor(s) may include any combination of general-purpose processors and dedicated processors (e.g., graphics processors, application processors, etc.). The processors may be coupled with and/or may include memory/storage and may be configured to execute instructions stored in the memory/storage to enable various applications and/or operating systems to run on the system. The memory/storage may include, for example, computer-readable medium 903, which may be a non-transitory computer-readable medium. Application circuitry 902 may, in some embodiments, connect to or include one or more sensors, such as environmental sensors, cameras, etc.

Baseband circuitry 904 may include circuitry such as, but not limited to, one or more single-core or multi-core processors. The baseband circuitry 904 may include one or more baseband processors and/or control logic to process baseband signals received from a receive signal path of the RF circuitry 906 and to generate baseband signals for a transmit signal path of the RF circuitry 906. Baseband processing circuitry 904 may interface with the application circuitry 902 for generation and processing of the baseband signals and for controlling operations of the RF circuitry 906. For example, in some embodiments, the baseband circuitry 904 may include a second generation (2G) baseband processor 904a, third generation (3G) baseband processor 904b, fourth generation (4G) baseband processor 904c, and/or other baseband processor(s) 904d for other existing generations, generations in development or to be developed in the future (e.g., fifth generation (5G), 9G, etc.). The baseband circuitry 904 (e.g., one or more of baseband processors 904a-d) may handle various radio control functions that enable communication with one or more radio networks via the RF circuitry 906. The radio control functions may include, but are not limited to, signal modulation/demodulation, encoding/decoding, radio frequency shifting, etc. In some implementations, the functionality of baseband circuitry 904 may be wholly or partially implemented by memory/storage devices configured to execute instructions stored in the memory/storage. The memory/storage may include, for example, a non-transitory computer-readable medium 904h.

In some embodiments, modulation/demodulation circuitry of the baseband circuitry 904 may include Fast-Fourier Transform (FFT), precoding, and/or constellation mapping/demapping functionality. In some embodiments, encoding/decoding circuitry of the baseband circuitry 904 may include convolution, tail-biting convolution, turbo, Viterbi, and/or Low Density Parity Check (LDPC) encoder/decoder functionality. Embodiments of modulation/demodulation and encoder/decoder functionality are not limited to these examples and may include other suitable functionality in other embodiments. In some embodiments, the baseband circuitry 904 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 904e of the baseband circuitry 904 may be configured to run elements of the protocol stack for signaling of the PHY, MAC, RLC, PDCP and/or RRC layers. In some embodiments, the baseband circuitry may include one or more audio digital signal processor(s) (DSP) 904f. The audio DSP(s) 904f may be include elements for compression/decompression and echo cancellation and may include other suitable processing elements in other embodiments.

In some embodiments, the baseband circuitry 904 may include elements of a protocol stack such as, for example, elements of an evolved universal terrestrial radio access network (EUTRAN) protocol including, for example, physical (PHY), media access control (MAC), radio link control (RLC), packet data convergence protocol (PDCP), and/or radio resource control (RRC) elements. A central processing unit (CPU) 904e of the baseband circuitry 904 may be configured to run elements of the protocol stack for signaling of the PHY, MAC, RLC, PDCP and/or RRC layers. In some embodiments, the baseband circuitry may include one or more audio digital signal processor(s) (DSP) 904f. The audio DSP(s) 104f may be include elements for compression/decompression and echo cancellation and may include other suitable processing elements in other embodiments.

Baseband circuitry 904 may further include memory/storage 904g. The memory/storage 904g may be used to load and store data and/or instructions for operations performed by the processors of the baseband circuitry 904. Memory/storage 904g may particularly include a non-transitory memory. Memory/storage for one embodiment may include any combination of suitable volatile memory and/or non-volatile memory. The memory/storage 904g may include any combination of various levels of memory/storage including, but not limited to, read-only memory (ROM) having embedded software instructions (e.g., firmware), random access memory (e.g., dynamic random access memory (DRAM)), cache, buffers, etc. The memory/storage 904g may be shared among the various processors or dedicated to particular processors.

Components of the baseband circuitry may be suitably combined in a single chip, a single chipset, or disposed on a same circuit board in some embodiments. In some embodiments, some or all of the constituent components of the baseband circuitry 904 and the application circuitry 902 may be implemented together such as, for example, on a system on a chip (SOC).

In some embodiments, the baseband circuitry 904 may provide for communication compatible with one or more radio technologies. For example, in some embodiments, the baseband circuitry 904 may support communication with an evolved universal terrestrial radio access network (EUTRAN) and/or other wireless metropolitan area networks (WMAN), a wireless local area network (WLAN), a wireless personal area network (WPAN). Embodiments in which the baseband circuitry 904 is configured to support radio communications of more than one wireless protocol may be referred to as multi-mode baseband circuitry.

RF circuitry 906 may enable communication with wireless networks using modulated electromagnetic radiation through a non-solid medium. In various embodiments, the RF circuitry 906 may include switches, filters, amplifiers, etc. to facilitate the communication with the wireless network. RF circuitry 906 may include a receive signal path which may include circuitry to down-convert RF signals received from the FEM circuitry 908 and provide baseband signals to the baseband circuitry 904. RF circuitry 906 may also include a transmit signal path which may include circuitry to up-convert baseband signals provided by the baseband circuitry 904 and provide RF output signals to the FEM circuitry 908 for transmission.

In some embodiments, the RF circuitry 906 may include a receive signal path and a transmit signal path. The receive signal path of the RF circuitry 906 may include mixer circuitry 906a, amplifier circuitry 906b and filter circuitry 906c. The transmit signal path of the RF circuitry 906 may include filter circuitry 906c and mixer circuitry 906a. RF circuitry 906 may also include synthesizer circuitry 906d for synthesizing a frequency for use by the mixer circuitry 906a of the receive signal path and the transmit signal path. In some embodiments, the mixer circuitry 906a of the receive signal path may be configured to down-convert RF signals received from the FEM circuitry 908 based on the synthesized frequency provided by synthesizer circuitry 906d. The amplifier circuitry 906b may be configured to amplify the down-converted signals and the filter circuitry 906c may be a low-pass filter (LPF) or band-pass filter (BPF) configured to remove unwanted signals from the down-converted signals to generate output baseband signals.

Output baseband signals may be provided to the baseband circuitry 904 for further processing. In some embodiments, the output baseband signals may be zero-frequency baseband signals, although this is not a requirement. In some embodiments, mixer circuitry 906a of the receive signal path may comprise passive mixers, although the scope of the embodiments is not limited in this respect.

In various embodiments, when the electronic device 900 is implemented as part of a user equipment (UE), the baseband circuitry 904 may be configured to determine based on communication with an evolved node B (eNB), a higher layer configuration of physical downlink control channel (PDSCH) resources with shortened time transmission interval (TTI), where in the PDSCH resources are subset of the ZP CSI-RS resources; and determine an indication of a PDSCH transmission with shortened TTI using the configured resources using the DCI. In such embodiments, RF circuitry 906 may provide for the communication with the eNB.

In other embodiments, when the electronic device 900 is implemented as part of a user equipment (UE), the radio frequency (RF) circuitry may be configured to receive an indication of a modulation and coding scheme (MCS) and a resource allocation from an eNB; and baseband circuitry 904 may be configured to calculate a number of available resources ($N_{RE}$) within the resource allocation; and determine a TBS indication based on the MCS and the $N_{RE}$ within the resource allocation.

In some embodiments, the mixer circuitry 906a of the transmit signal path may be configured to up-convert input baseband signals based on the synthesized frequency provided by the synthesizer circuitry 906d to generate RF output signals for the FEM circuitry 908. The baseband signals may be provided by the baseband circuitry 904 and may be filtered by filter circuitry 906c. The filter circuitry 906c may include a low-pass filter (LPF), although the scope of the embodiments is not limited in this respect.

In some embodiments, the mixer circuitry 906a of the receive signal path and the mixer circuitry 906a of the transmit signal path may include two or more mixers and may be arranged for quadrature downconversion and/or upconversion respectively. In some embodiments, the mixer circuitry 906a of the receive signal path and the mixer circuitry 906a of the transmit signal path may include two or more mixers and may be arranged for image rejection (e.g., Hartley image rejection). In some embodiments, the mixer circuitry 906a of the receive signal path and the mixer circuitry 906a may be arranged for direct downconversion and/or direct upconversion, respectively. In some embodiments, the mixer circuitry 906a of the receive signal path and the mixer circuitry 906a of the transmit signal path may be configured for super-heterodyne operation.

In some embodiments, the output baseband signals and the input baseband signals may be analog baseband signals, although the scope of the embodiments is not limited in this respect. In some alternate embodiments, the output baseband signals and the input baseband signals may be digital baseband signals. In these alternate embodiments, the RF circuitry 906 may include analog-to-digital converter (ADC) and digital-to-analog converter (DAC) circuitry and the baseband circuitry 904 may include a digital baseband interface to communicate with the RF circuitry 906.

In some dual-mode embodiments, a separate radio IC circuitry may be provided for processing signals for each spectrum, although the scope of the embodiments is not limited in this respect.

In some embodiments, the synthesizer circuitry 906d may be a fractional-N synthesizer or a fractional N/N+6 synthesizer, although the scope of the embodiments is not limited in this respect as other types of frequency synthesizers may be suitable. For example, synthesizer circuitry 906d may be a delta-sigma synthesizer, a frequency multiplier, or a synthesizer comprising a phase-locked loop with a frequency divider.

The synthesizer circuitry 906d may be configured to synthesize an output frequency for use by the mixer circuitry 906a of the RF circuitry 906 based on a frequency input and a divider control input. In some embodiments, the synthesizer circuitry 906d may be a fractional N/N+6 synthesizer.

In some embodiments, frequency input may be provided by a voltage-controlled oscillator (VCO), although that is not a requirement. Divider control input may be provided by either the baseband circuitry 904 or the applications processor 902 depending on the desired output frequency. In some embodiments, a divider control input (e.g., N) may be determined from a look-up table based on a channel indicated by the applications processor 902.

Synthesizer circuitry 906d of the RF circuitry 906 may include a divider, a delay-locked loop (DLL), a multiplexer and a phase accumulator. In some embodiments, the divider may be a dual modulus divider (DMD) and the phase accumulator may be a digital phase accumulator (DPA). In some embodiments, the DMD may be configured to divide the input signal by either N or N+6 (e.g., based on a carry out) to provide a fractional division ratio. In some example embodiments, the DLL may include a set of cascaded, tunable, delay elements, a phase detector, a charge pump and a D-type flip-flop. In these embodiments, the delay elements may be configured to break a VCO period up into Nd equal packets of phase, where Nd is the number of delay elements in the delay line. In this way, the DLL provides negative feedback to help ensure that the total delay through the delay line is one VCO cycle.

In some embodiments, synthesizer circuitry 906d may be configured to generate a carrier frequency as the output frequency, while in other embodiments, the output frequency may be a multiple of the carrier frequency (e.g., twice the carrier frequency, four times the carrier frequency) and used in conjunction with quadrature generator and divider circuitry to generate multiple signals at the carrier frequency with multiple different phases with respect to each other. In some embodiments, the output frequency may be a LO frequency (fLO). In some embodiments, the RF circuitry 906 may include an IQ/polar converter.

FEM circuitry 908 may include a receive signal path which may include circuitry configured to operate on RF signals received from one or more antennas 960, amplify the received signals and provide the amplified versions of the received signals to the RF circuitry 906 for further processing. FEM circuitry 908 may also include a transmit signal path which may include circuitry configured to amplify signals for transmission provided by the RF circuitry 906 for transmission by one or more of the one or more antennas 960.

In some embodiments, the FEM circuitry 908 may include a TX/RX switch to switch between transmit mode and receive mode operation. The FEM circuitry may include a receive signal path and a transmit signal path. The receive signal path of the FEM circuitry may include a low-noise amplifier (LNA) to amplify received RF signals and provide the amplified received RF signals as an output (e.g., to the RF circuitry 906). The transmit signal path of the FEM circuitry 908 may include a power amplifier (PA) to amplify input RF signals (e.g., provided by RF circuitry 906), and one or more filters to generate RF signals for subsequent transmission (e.g., by one or more of the one or more antennas 960).

In some embodiments, the electronic device 900 may include additional elements such as, for example, memory/storage, display, camera, sensors, and/or input/output (I/O) interface. In some embodiments, the electronic device of Fig. 9 may be configured to perform one or more methods, processes, and/or techniques such as those described herein.

In the preceding specification, various embodiments have been described with reference to the accompanying drawings. It will, however, be evident that various modifications and changes may be made thereto, and additional embodiments may be implemented. The specification and drawings are accordingly to be regarded in an illustrative rather than restrictive sense.

For example, while series of signals and/or operations have been described with regard to Figs. 3 and 4, the order of the signals may be modified in other implementations. Further, non-dependent signals may be performed in parallel.

It will be apparent that example aspects, as described above, may be implemented in many different forms of software, firmware, and hardware in the implementations illustrated in the figures. The actual software code or specialized control hardware used to implement these aspects should not be construed as limiting. Thus, the operation and behavior of the aspects were described without reference to the specific software code-it being understood that software and control hardware could be designed to implement the aspects based on the description herein.

**Claims**

1. An apparatus for a baseband processor of User Equipment, UE (110), for a cellular communication network, the apparatus comprising circuitry to:

   process communications from a Base Station, BS (125), to determine information relating to repetition decoding of plural information elements using one of a plurality of repetition levels $R_l$ with $l > 1$ repetitions, the repetition levels having a maximum repetition level $R_{Lmax}$ with a maximum number of repetitions $Lmax$, the information including:

   a search space for the UE (110) to perform the repetition decoding of a Narrowband Physical Downlink Control Channel, NPDCCH, and
   identification information of subframes to be used for the repetition decoding of a Narrowband Physical Downlink Shared Channel, NPDSCH;

   perform the repetition decoding for the NPDCCH and the NPDSCH using the search space and the identified subframes, respectively, the repetition decoding being performed based on a plurality of clusters of subframes, each of the subframe clusters including n continuous subframes, where n is an integer greater than one; determine a time interval defined between each pair of consecutively occurring subframe clusters of an information element based on a repetition level corresponding to the repetition decoding, wherein the time interval is a common value for the plurality of repetition levels; and wherein the subframe clusters of said respective information elements are discontinuously received with respect to one another, the information elements including at least two repetition candidates received as at least two identical subframes sequential in time and repeated within the plurality of clusters of subframes according to the time interval.

2. The apparatus of claim 1, wherein the discontinuous reception of the clusters of the plural information elements includes receiving each of the clusters of a given one of the plural information elements with a time interval of $T_l$ subframes, wherein $T_l$ is the time interval between the first subframe of a prior cluster for the given one of the plural information elements and the first subframe of a subsequent cluster, where $T_l$ is expressed in terms of a number of downlink, DL, subframes.

3. The apparatus of any of claims 1 or 2, wherein the apparatus further comprises circuitry to:

   communicate, using dedicated or common Radio Resource Control, RRC, signaling, with the BS (125); and
   process one or more parameters, received via the RRC signaling, to determine the search space.

4. The apparatus of claim 3, wherein the RRC signaling indicates the maximum time period *Dmax* for transmitting an information element at the highest repetition level *Lmax* to define the search space

5. The apparatus of any of claims 1 to 4 wherein the UE (110) includes a machine-to-machine type device.

6. The apparatus of claim 3, wherein the information relating to repetition decoding is received, from the BS (125), via System Information Block, SIB, signaling.

7. A computer-readable medium containing program instructions for causing one or more processors, associated with User Equipment, UE (110), operable with a cellular communication network, to:

process communications from a Base Station, BS (125), to determine
information relating to repetition decoding of plural information elements using one of a plurality of repetition levels $R_l$ with $l > 1$ repetitions, the repetition levels having a maximum repetition level $R_{Lmax}$ with a maximum number of repetitions *Lmax,* the information including:

a search space for the UE (110) to perform the repetition decoding of a Narrowband Physical Downlink Control Channel, NPDCCH to decode the plural information elements, and
identification information of subframes to be used for the repetition decoding of a Narrowband Physical Downlink Shared Channel, NPDSCH; and

perform the repetition decoding for the NPDCCH and the NPDSCH using the search space and the identified subframes, respectively, the repetition decoding being performed based on a plurality of clusters of subframes,
each of the subframe clusters including *n* continuous subframes, where *n* is an integer greater than or equal to one;
determine a time interval defined between each pair of consecutively occurring subframe clusters of an information element based on a repetition level corresponding to the repetition decoding, wherein the time interval is a common value for the plurality of repetition levels; and
wherein the subframe clusters of said information elements are discontinuously received with respect to one another, the information elements including at least two repetition candidates received as at least two identical subframes sequential in time and repeated within the plurality of clusters of subframes according to the time interval.

8. The computer-readable medium of claim 7, wherein the discontinuous reception of the clusters of the plural information elements includes transmitting each of the subframe clusters of a given one of the plural information elements with a time interval of $T_l$ subframes, wherein $T_l$ is the time interval between the first subframe of a prior cluster and the first subframe of a subsequent cluster, where $T_l$ is expressed in terms of a number of downlink, DL, subframes.

9. The computer-readable medium of claim 7 or 8, wherein the information relating to repetition decoding is received, from the BS (125), via System Information Block, SIB, signaling.

10. The computer-readable medium of any of claims 7 to 9, where the UE (110) is a machine-to-machine type device.

**Patentansprüche**

1. Vorrichtung für einen Basisbandprozessor eines Benutzergeräts, UE (110), für ein zellulares Kommunikationsnetzwerk, wobei die Vorrichtung eine Schaltungsanordnung umfasst zum:
Verarbeiten von Kommunikationen von einer Basisstation, BS (125), um Information zu bestimmen, die sich auf eine Wiederholungsdecodierung mehrerer Informationselemente bezieht, unter Verwendung einer von einer Vielzahl von Wiederholungsstufen $R_l$ mit $l > 1$ Wiederholungen, wobei die Wiederholungsstufen eine maximale Wiederholungsstufe $R_{Lmax}$ mit einer maximalen Anzahl von Wiederholungen *Lmax* aufweisen, wobei die Information umfasst:

einen Suchraum für das UE (110), um die Wiederholungsdecodierung eines physischen Schmalband-Downlink-Steuerkanals, NPDCCH, durchzuführen, und
Identifikationsinformation von Unterrahmen, die für die Wiederholungsdecodierung eines gemeinsam genutzten physischen Schmalband-Downlink-Kanals, NPDSCH, verwendet werden soll;
Durchführen der Wiederholungsdecodierung für den NPDCCH und den NPDSCH unter Verwendung des Suchraums bzw. der identifizierten Unterrahmen, wobei die Wiederholungsdecodierung basierend auf einer Vielzahl von Clustern von Unterrahmen durchgeführt wird, wobei jeder der Unterrahmen-Cluster n kontinuierliche Unterrahmen umfasst, wobei n eine ganze Zahl größer als eins ist;
Bestimmen eines Zeitintervalls, das zwischen jedem Paar von aufeinanderfolgend auftretenden Unterrahmen-Clustern eines Informationselements definiert ist, basierend auf einer Wiederholungsstufe, die der Wiederholungsdecodierung entspricht, wobei das Zeitintervall ein gemeinsamer Wert für die Vielzahl von Wiederholungsstufen ist; und

wobei die Unterrahmen-Cluster der jeweiligen Informationselemente diskontinuierlich in Bezug aufeinander empfangen werden, wobei die Informationselemente mindestens zwei Wiederholungskandidaten umfassen, die als mindestens zwei identische Unterrahmen zeitlich nacheinander empfangen und innerhalb der Vielzahl von Clustern von Unterrahmen gemäß dem Zeitintervall wiederholt werden.

2. Vorrichtung nach Anspruch 1, wobei der diskontinuierliche Empfang der Cluster der mehreren Informationselemente das Empfangen jedes der Cluster eines gegebenen der mehreren Informationselemente mit einem Zeitintervall von $T_l$ Unterrahmen umfasst, wobei $T_l$ das Zeitintervall zwischen dem ersten Unterrahmen eines vorherigen Clusters für das gegebene der mehreren Informationselemente und dem ersten Unterrahmen eines nachfolgenden Clusters ist, wobei $T_l$ in Form einer Anzahl von Downlink-, DL-, Unterrahmen ausgedrückt wird.

3. Vorrichtung nach einem der Ansprüche 1 oder 2, wobei die Vorrichtung ferner eine Schaltungsanordnung umfasst zum:

Kommunizieren, unter Verwendung einer dedizierten oder gemeinsamen Funkressourcensteuerungs-, RRC-, Signalisierung, mit der BS (125); und

Verarbeiten eines oder mehrerer Parameter, die über die RRC-Signalisierung empfangen werden, um den Suchraum zu bestimmen.

4. Vorrichtung nach Anspruch 3, wobei die RRC-Signalisierung die maximale Zeitdauer *Dmax* zum Übertragen eines Informationselements auf der höchsten Wiederholungsstufe *Lmax* angibt, um den Suchraum zu definieren.

5. Vorrichtung nach einem der Ansprüche 1 bis 4, wobei das UE (110) eine Maschine-zu-Maschine-Vorrichtung umfasst.

6. Vorrichtung nach Anspruch 3, wobei die Information bezüglich der Wiederholungsdecodierung von der BS (125) über eine Systeminformationsblock-, SIB-, Signalisierung empfangen wird.

7. Computerlesbares Medium, das Programmanweisungen enthält, um einen oder mehrere Prozessoren, die mit einem Benutzergerät, UE (110), assoziiert sind, das mit einem zellularen Kommunikationsnetzwerk betreibbar ist, zu veranlassen zum:

Verarbeiten von Kommunikationen von einer Basisstation, BS (125), um Information zu bestimmen, die sich auf eine Wiederholungsdecodierung mehrerer Informationselemente bezieht, unter Verwendung einer von einer Vielzahl von Wiederholungsstufen $R_l$ mit $l > 1$ Wiederholungen, wobei die Wiederholungsstufen eine maximale Wiederholungsstufe $R_{Lmax}$ mit einer maximalen Anzahl von Wiederholungen *Lmax* aufweisen, wobei die Information umfasst:

einen Suchraum für das UE (110), um die Wiederholungsdecodierung eines physischen Schmalband-Downlink-Steuerkanals, NPDCCH, durchzuführen, um die mehreren Informationselemente zu decodieren, und Identifikationsinformation von Unterrahmen, die für die Wiederholungsdecodierung eines gemeinsam genutzten physischen Schmalband-Downlink-Kanals, NPDSCH, verwendet werden soll; und

Durchführen der Wiederholungsdecodierung für den NPDCCH und den NPDSCH unter Verwendung des Suchraums bzw. der identifizierten Unterrahmen, wobei die Wiederholungsdecodierung basierend auf einer Vielzahl von Clustern von Unterrahmen durchgeführt wird, wobei jeder der Unterrahmen-Cluster n kontinuierliche Unterrahmen umfasst, wobei n eine ganze Zahl größer als oder gleich eins ist;

Bestimmen eines Zeitintervalls, das zwischen jedem Paar von aufeinanderfolgend auftretenden Unterrahmen-Clustern eines Informationselements definiert ist, basierend auf einer Wiederholungsstufe, die der Wiederholungsdecodierung entspricht, wobei das Zeitintervall ein gemeinsamer Wert für die Vielzahl von Wiederholungsstufen ist; und

wobei die Unterrahmen-Cluster der Informationselemente diskontinuierlich in Bezug aufeinander empfangen werden, wobei die Informationselemente mindestens zwei Wiederholungskandidaten umfassen, die als mindestens zwei identische Unterrahmen zeitlich nacheinander empfangen und innerhalb der Vielzahl von Clustern von Unterrahmen gemäß dem Zeitintervall wiederholt werden.

8. Computerlesbares Medium nach Anspruch 7, wobei der diskontinuierliche Empfang der Cluster der mehreren Informationselemente das Übertragen jedes der Unterrahmen-Cluster eines gegebenen der mehreren Informationselemente mit einem Zeitintervall von $T_l$ Unterrahmen umfasst, wobei $T_l$ das Zeitintervall zwischen dem ersten Unterrahmen eines vorherigen Clusters und dem ersten Unterrahmen eines nachfolgenden Clusters ist, wobei $T_l$ in Form einer Anzahl von Downlink-, DL-, Unterrahmen ausgedrückt wird.

9. Computerlesbares Medium nach Anspruch 7 oder 8, wobei die Information bezüglich der Wiederholungsdecodierung von der BS (125) über eine Systeminformationsblock-, SIB-, Signalisierung empfangen wird.

10. Computerlesbares Medium nach einem der Ansprüche 7 bis 9, wobei das UE (110) eine Maschine-zu-Maschine-Vorrichtung ist.

## Revendications

1. Un appareil pour un processeur bande de base d'un équipement utilisateur, UE (110), pour un réseau de communication cellulaire, l'appareil comprenant une circuiterie pour :

traiter des communications en provenance d'une station de base, BS (125), pour déterminer des informations relatives à un décodage répétitif de plusieurs éléments d'information en utilisant l'un d'une pluralité de niveaux de répétition $R_l$ avec $l > 1$ répétitions, les niveaux de répétition ayant un niveau maximal de répétition $R_{Lmax}$ avec un nombre maximal de répétitions $Lmax,$ les informations comprenant :

un espace de recherche pour que l'UE (110) exécute le décodage répétitif d'un canal de contrôle de liaison descendante physique en bande étroite, NPDCCH, et une information d'identification de sous-trames à utiliser pour le décodage répétitif d'un canal partagé de liaison descendante physique en bande étroite, NPDSCH ;

exécuter le décodage répétitif pour le NPDCCH et le NPDSCH en utilisant, respectivement, l'espace de recherche et les sous-trames identifiées, le décodage répétitif étant exécuté sur la base d'une pluralité de groupements de sous-trames, chacun des groupements de sous-trames comprenant n sous-trames continues, n étant un entier supérieur à l'unité ; déterminer un intervalle temporel défini entre chaque paire de groupements de sous-trames, se présentant en succession, d'un élément d'information, sur la base d'un niveau de répétition correspondant au décodage répétitif, l'intervalle temporel étant une valeur commune à la pluralité de niveaux de répétition ; et dans lequel les groupements de sous-trames desdits éléments d'information respectifs sont reçus de façon discontinue les uns par rapport aux autres, les éléments d'information comprenant au moins deux candidats de répétition reçus sous forme d'au moins deux sous-trames identiques séquentiellement dans le temps et répétés à l'intérieur de la pluralité de groupements de sous-trames en fonction de l'intervalle temporel.

2. L'appareil de la revendication 1, dans lequel la réception discontinue des groupements de plusieurs éléments d'information comprend la réception de chacun des groupements de l'un donné des plusieurs éléments d'information avec un intervalle temporel de $T_l$ sous-trames, $T_l$ étant l'intervalle temporel entre la première sous-trame d'un groupement précédent pour ledit un élément donné de la pluralité d'éléments d'information et la première sous-trame d'un groupement suivant, $T_l$ étant exprimé en termes d'un nombre de sous-trames de liaison descendante, DL.

3. L'appareil de l'une des revendications 1 ou 2, dans lequel l'appareil comprend en outre une circuiterie pour :

communiquer avec la BS (125) en utilisant une signalisation de contrôle de ressource radio, RRC, dédiée ou commune ; et traiter un ou plusieurs paramètres, reçus via la signalisation RRC, pour déterminer l'espace de recherche.

4. L'appareil de la revendication 3, dans lequel la signalisation RRC indique la période temporelle maximale $Dmax$ pour la transmission d'un élément d'information au niveau de répétition $Lmax$ le plus élevé pour définir l'espace de recherche.

5. L'appareil de l'une des revendications 1 à 4, dans lequel l'UE (110) comprend un dispositif de type machine-à-machine.

6. L'appareil de la revendication 3, dans lequel l'information relative au décodage répétitif est reçue, en provenance de la BS (125), via une signalisation de bloc d'information système, SIB.

7. Un support lisible par calculateur contenant des instructions de programme pour faire en sorte qu'un ou plusieurs processeurs, associés à un équipement utilisateur, UE (110), pouvant être mis en œuvre avec un réseau de communication sans fil :

traitent des communications en provenance d'une station de base, BS (125), pour déterminer des informations relatives à un décodage répétitif de plusieurs éléments d'information en utilisant l'un d'une pluralité de niveaux de répétition $R_l$ avec $l > 1$ répétitions, les niveaux de répétition ayant un niveau maximal de répétition $R_{Lmax}$ avec un nombre maximal de répétitions *Lmax*, les informations comprenant :

    un espace de recherche pour que l'UE (110) exécute le décodage répétitif d'un canal de contrôle de liaison descendante physique en bande étroite, NPDCCH, pour décoder les plusieurs éléments d'information, et une information d'identification de sous-trames à utiliser pour le décodage répétitif d'un canal partagé de liaison descendante physique en bande étroite, NPDSCH ;

    exécutent le décodage répétitif pour le NPDCCH et le NPDSCH en utilisant, respectivement, l'espace de recherche et les sous-trames identifiées, le décodage répétitif étant exécuté sur la base d'une pluralité de groupements de sous-trames, chacun des groupements de sous-trames comprenant n sous-trames continues, n étant un entier supérieur ou égal à l'unité ; déterminent un intervalle temporel défini entre chaque paire de groupements de sous-trames, se présentant en succession, d'un élément d'information, sur la base d'un niveau de répétition correspondant au décodage répétitif, l'intervalle temporel étant une valeur commune à la pluralité de niveaux de répétition ; et dans lequel les groupements de sous-trames desdits éléments d'information respectifs sont reçus de façon discontinue les uns par rapport aux autres, les éléments d'information comprenant au moins deux candidats de répétition reçus sous forme d'au moins deux sous-trames identiques séquentiellement dans le temps et répétés à l'intérieur de la pluralité de groupements de sous-trames en fonction de l'intervalle temporel.

**8.** Le support lisible par calculateur de la revendication 7, dans lequel la réception discontinue des groupements de plusieurs éléments d'information comprend la transmission de chacun des groupements de sous-trames de l'un donné des plusieurs éléments d'information avec un intervalle temporel de $T_I$ sous-trames, $T_I$ étant l'intervalle temporel entre la première sous-trame d'un groupement précédent pour ledit un élément donné de la pluralité d'éléments d'information et la première sous-trame d'un groupement suivant, $T_I$ étant exprimé en termes d'un nombre de sous-trames de liaison descendante, DL.

**9.** Le support lisible par calculateur de la revendication 7 ou 8, dans lequel l'information relative au décodage répétitif est reçue, en provenance de la BS (125), via une signalisation de bloc d'information système, SIB.

**10.** Le support lisible par calculateur de l'une des revendications 7 à 9, dans lequel l'UE (110) est un dispositif de type machine-à-machine.

100

110 UE

110 UE

110 UE

← IoT
UEs

125

125

Cellular Network
120

PDN
130

**Fig. 1**

205                    205                    205

## Fig. 2

300 ———➘

Determine the blind decode
search space for NPDCCH.          320

Decode the control channel
using blind decode
techniques applied to the
search space.                     330

Perform uplink or downlink
communications using control
information received in the
control channel.                  340

## Fig. 3

400 —

Determine the blind decode
search space for the UE.

420

Configure the determined
search space at the UE.

430

Transmit control information,
to the UE, using blind coding.

440

Perform uplink or downlink
communications using the
control information.

450

# Fig. 4

$R_1$

| 1 | | 2 | | 3 | | 4 | | 5 | | 6 | | 7 | | 8 |

## Fig. 5A

$R_2$

| 1 | | 1 | | 2 | | 2 | | 3 | | 3 | | 4 | | 4 |

$\overleftrightarrow{\phantom{xx}}$
$T_2 = 4\text{ SFs}$

## Fig. 5B

$R_4$

| 1 | | 1 | | 1 | | 1 | | 2 | | 2 | | 2 | | 2 |

$\overleftrightarrow{\phantom{xx}}$
$T_4 = 4\text{ SFs}$

## Fig. 5C

$R_8$

| 1 | | 1 | | 1 | | 1 | | 1 | | 1 | | 1 | | 1 |

$\overleftrightarrow{\phantom{xx}}$
$T_8 = 4\text{ SFs}$

## Fig. 5D

$R_1$

## Fig. 6A

$R_2$

$T_2 = 16$ SFs

## Fig. 6B

$R_4$

$T_4 = 8$ SFs

## Fig. 6C

$R_8$

$T_8 = 4$ SFs

## Fig. 6D

$R_2$ | 1 | 1 | | | 2 | 2 | | | 3 | 3 | | | 4 | 4 | | | 5 | 5 | | | 6 | 6 | | | 7 | 7 | | | 8 | 8 |

## Fig. 7A

$R_4$ | 1 | 1 | | | 2 | 2 | | | 3 | 3 | | | 4 | 4 | | | 1 | 1 | | | 2 | 2 | | | 3 | 3 | | | 4 | 4 |

$T_4 = 16$ SFs

## Fig. 7B

$R_8$ | 1 | 1 | | | 2 | 2 | | | 1 | 1 | | | 2 | 2 | | | 1 | 1 | | | 2 | 2 | | | 1 | 1 | | | 2 | 2 |

$T_8 = 8$ SFs

## Fig. 7C

$R_{16}$ | 1 | 1 | | | 1 | 1 | | | 1 | 1 | | | 1 | 1 | | | 1 | 1 | | | 1 | 1 | | | 1 | 1 | | | 1 | 1 |

$T_{16} = 4$ SFs

## Fig. 7D

$R_2$

Fig. 8A

$R_4$

Fig. 8B

$R_8$

Fig. 8C

$R_{16}$

Fig. 8D

Fig. 9

**REFERENCES CITED IN THE DESCRIPTION**

*This list of references cited by the applicant is for the reader's convenience only. It does not form part of the European patent document. Even though great care has been taken in compiling the references, errors or omissions cannot be excluded and the EPO disclaims all liability in this regard.*

**Patent documents cited in the description**

- EP 2919402 A1